# EUROPEAN PATENT SPECIFICATION

(11) **EP 1 662 896 B1**
(45) Date of publication and mention of the grant of the patent: **24.10.2012**
(21) Application number: 04786941.7
(22) Date of filing: 14.09.2004
(51) Int. Cl.: A23K 1/16, A23K 1/18

(54) **VITAMIN CONTAINING PET FOOD COMPOSITIONS**
VITAMINHALTIGE HAUSTIERFUTTERMITTEL
COMPOSITIONS D'ALIMENTS VITAMINES POUR ANIMAUX DOMESTIQUES

(30) Priority: 22.09.2003 EP 03021365
(43) Date of publication of application: 07.06.2006
(73) Proprietor: DSM IP Assets B.V., 6411 TE Heerlen (NL)
(72) Inventor: KRAMMER, Stephanie, 79541 Lörrach-Hauingen (DE); WEBER, Gilbert, CH-4312 Magden (CH)
(74) Representative: Schwander, Kuno
(86) International application number: PCT/EP2004/010236
(87) International publication number: WO 2005/027650

(56) References cited:
- WO-A-90/09179
- WO-A-03/059358
- US-A- 5 154 925
- US-A1- 2003 170 324
- RUTHERFORD, W. E., BORDIER, P., MARIE, P., HRUSKA, K., HARTER, H., GREENWALT, A., BLONDIN, J., HADDAD, J., BRICKER, N., ET AL.: "PHOSPHATE CONTROL AND 25-HYDROXYCHOLECALCIFEROL ADMINISTRATION IN PREVENTING EXPERIMENTAL RENAL OSTEODYSTROPHY IN THE DOG" JOURNAL OF CLINICAL INVESTIGATION, vol. 60, 1977, pages 332-341, XP002309278 USNEW YORK, NY
- TRYFONIDOU, M. A., ET AL: "Dietary 135-fold cholecalciferol supplementation severly disturbs the endochondral ossification in growing dogs" Domestic Animal Endocrinology, vol. 24, May 2003 (2003-05), pages 265-285, XP002309279 Elsevier
- DATABASE MEDLINE [Online] US NATIONAL LIBRARY OF MEDICINE (NLM), BETHESDA, MD, US; April 1988 (1988-04), DURLIK M: "[Effect of long-term administration of 25-hydroxycholecalciferol on the regeneration of compact and spongy bone tissue in dogs receiving prednisone]" XP002309280 Database accession no. NLM3270811 & POLSKIE ARCHIWUM MEDYCYNY WEWNETRZNEJ. APR 1988, vol. 79, no. 4, April 1988 (1988-04), pages 181-187, ISSN: 0032-3772
- DATABASE BIOSIS [Online] BIOSCIENCES INFORMATION SERVICE, PHILADELPHIA, PA, US; 1997, MALIK R ET AL: "Rickets in a litter of racing greyhounds" XP002309281 Database accession no. PREV199799499147 & JOURNAL OF SMALL ANIMAL PRACTICE, vol. 38, no. 3, 1997, pages 109-114, ISSN: 0022-4510
- DATABASE BIOSIS [Online] BIOSCIENCES INFORMATION SERVICE, PHILADELPHIA, PA, US; MALIK R ET AL: "Rickets in a litter of racing greyhounds", XP002309281, retrieved from BIOSIS Database accession no. PREV199799499147 & JOURNAL OF SMALL ANIMAL PRACTICE, vol. 38, no. 3, 1997, pages 109-114,

## Description

The present invention relates to compositions comprising 25-hydroxycholecalciferol (25-hydroxy-vitamin D₃), and to the use of 25-hydroxycholecalciferol for preventing and treating joint diseases in pets.

The present invention, as discribed in claim 1, relates to a pet food, comprising 25-hydroxycholecalciferol in a concentration of from 500 IU to 200 IU per kg food, and vitamin D₃ in a concentration of from 500 IU to 2000 IU per kg food, the total amount of 25-hydroxycholecalciferol and vitamin D₃ not exceeding 5000 IU per kg food; for use in the manufacture of a pet food for treatment or prevention of osteochondrosis, degenerative arthritis or arthropathy in large or giant breed dogs.

The term "IU" (International Unit) is used herein for both vitamin D₃ and 25-hydroxycholecalciferol, 1 IU corresponding to 0.025 microgram of vitamin D₃ and 25-hydroxycholecalciferol, respectively.

Examples of pets include dogs, cats and rodents, e.g., chinchillas, guinea pigs, degus, mice, gerbils, hamsters, rats, ferrets and lagomorphes, e.g., rabbits. Animals of all ages are included, e.g. young, adults, animals of medium age and seniors. The compositions and method of treatment are for use in large (dogs over 25 kg BW, e.g. German Shepherd, Labrador Retriever, Golden Retriever, Boxer, Briard, Beauceron, Weimaraner) and giant breeds of dogs (dogs over 45 kg BW, e.g. Great Danes, Saint Bernards, Rottweiler, Leonberger, Newfoundland, Great Pyrenees). Osteochondrosis is a disturbance in endochondral ossification that is sometimes classified as dyschondroplasia. It may involve the separation of the immatur articular cartilage from the underlying epiphyseal bone, which sometimes dissects completely free and floats loose in the synovial cavity and results in accompanying synovitis, or it may result in the retention of pyramidal cores of physeal cartilage projecting into the metaphysis. Often, these two lesions occur simultaneously in the same bone. The disease occurs during maximal growth when the biomechanical stresses are greatest in the immature skeleton (4-8 months in dogs). It is most common in large and giant breeds of dogs and in rapidly growing pigs, horses (Osteochondrosis), turkeys, and chickens.

Other degenerative joint diseases are degenerative arthritis and arthropathy.

Degenerative arthritis, a progressive deterioration of articular cartilage in diarthrodial joints, is characterized by hyaline cartilage thinning, joint effusion, and periarticular osteophyte formation. Joint degeneration can be caused by trauma, infection, immune-mediated diseases, or developmental malformations. The inciting cause initiates chondrocyte necrosis, release of degradative enzymes, synovitis, and continued cartilage destruction and inflammation. Abnormal cartilage congruency and joint capsule anatomy can further lead to alteration in normal joint biomechanical function. Pain and lameness develop secondary to joint dysfunction or muscle atrophy and to limb disuse. Clinical signs of degenerative joint disease include lameness, joint swelling, muscle atrophy, pericapsular fibrosis, and crepitation. Radiographic changes in the joint include joint effusion, periarticular soft-tissue swelling, osteophytosis, subchondral bone sclerosis, and possibly narrowed joint. Arthrocentesis may be unremarkable or yield minor changes in color, turbidity, or cell counts of synovial fluid. Treatments can be medical or surgical. Nonsurgical therapies include weight reduction, controlled exercise on soft surfaces, and therapeutic application of warm compresses to affected joints. Nonsteroidal antiinflammatory drugs (eg, aspirin, phenylbutazone, or carprofen) will reduce pain and inflammation. Corticosteroids will also suppress prostaglandin synthesis and subsequent inflammation, but shart-term use is advised to prevent iatrogenic Cushing's syndrome, cartilage degeneration, and intestinal perforation. Joint fluid modifiers such as glycosaminoglycans or sodium hyaluronate prevent cartilage degradation, although results of objective clinical trials are not available.. Surgical options include joint fusion (arthrodesis), most frequently performed on the carpus and tarsus; joint replacement, such as total hip replacement; joint excision, such as femoral head and neck osteotomy; and amputation. Prognosis is variable and depends on the location and severity of the arthropathy.

Arthropathy: This nonspecific condition affecting mainly the hip and stifle is characterized by degeneration of articular cartilage and eburnation of subchondral bone, joint effusion, fibrosis with calcification of the joint capsule, and osteophytes. Many causes and predisposing factors probably influence the development, age of onset, and severity. Inherited predisposition to degenerative arthropathy occurs. Joint instability after trauma is a common cause. Nutritional factors involved in some cases are rations high in phosphorus and low in calcium, which probably influence the strength of subchondral bone. Copper deficiency or fluoride poisoning also may act similarly. The role of infection is unclear. Onset is gradual, and both hip joints are usually affected; stifle involvement is rare. Signs progress concomitantly with degeneration of cartilage and development of osteophytes. Lameness to the point of incapacitation, with crepitation of degenerate joints, may develop in a few months; however, correlation between pathologic changes and clinical signs is poor. The earliest changes occur in the acetabulum and on the dorsomedial surface of the femoral head. Changes in the joints are usually irreversible by the time the diagnosis is made. Palliative treatment in valuable breeding animals should be undertaken with the knowledge that the condition or predisposing factors may be inherited. The diet should be carefully analyzed and, if necessary, corrected. This is especially important in fast-growing animals, in which adequate exercise is indicated and overfinishing should be avoided.

An animal model for demonstrating the efficacy of the food and method of treatment in accordance with the invention is, e.g., a giant breed puppy such as a great dane. 32 puppies (4 months of age) are assigned randomly to be supplemented daily with 1000 IU/kg dog food of vitamin D₃ 1000 IU/kg dog food of 25-hydroxycholecalciferol, 500 IU/kg dog food of vitamin D₃ plus 500 IU/kg dog food of 25-hydroxycholecalciferol, 1000 IU/kg dog food ofvitamin D₃ plus 1000 IU/kg dog food of 25-hydroxyr-holecalcferol and 2000 IU/kg dog food of vitamin D₃ plus 2000 IU/kg dog food of 25-hydroxycholecalciferol for 6 months.

The following parameters for the determination of changes in dog's joint health, e.g., the presence of osteochondrosis and progress in the treatment of the disease are measured: General health status, bone mineral density by QCT, X-Ray, biochemical markers of bone turnover (Total Alkalane Phosphatase in serum; bone specific Alkaline Phosphatase in serum (bone formation); pyridinoline and deoxypyridinolin in urine (bone resorption); osteocalcin (bone formation)), creatinin, metabolites of Vitamin D₃ (1,25 (OH)₂-; 24,25(OH)₂-, 1,24,25(OH)₃-, 25(OH)-Vitamin D₃) in plasma, GH, IGF-I, parathyroid hormone, calcitonin, plasma calcium and phosphate, calcium balance, histology of epiphysis cartilage (rip) for determination of endochondral ossification, as well as radiology, histomorphometry, and autoradiogram.

While the ratio of 25-hydroxycholecalciferol : vitamin D₃ is not narrowly critical, said ratio may range from about 1 : 9 to about 9 : 1 with a ratio of 1:1 being preferred. WO90/09179 describes 25-hydroxy-cholecalciferol for use in joint desease treatment at 200-800 I.U. per kg of food.

For treatment and prevention of joint diseases in dogs, an appropriate daily dosage for a dog would be from about 5-20 IU of 25-hydroxycholecalciferol and, optionally, 5-20 IU of vitamin D₃. 25-hydroxycholecalciferol and vitamin D₃ are suitably administered as a food supplement in an amount to provide a concentration of 500 to about 2000 IU of 25-hydroxycholecalciferol and, 500 to about 2000 IU of vitamin D₃ per kg food, the total amount of 25-hydroxycholecalciferol and vitamin D₃ not exceeding 5000 IU per kg food. The term "food" when used in context with concentrations of 25-hydroxycholecalciferol and vitamin D₃, respectively, contained in said food refers to food which provides a metabolizable energy of about 4000 kcal or about 17 MJoule per kg food.

The pet food according to the present invention may be based on any conventional pet food. Particulars as to the composition of pet food can be seen, e.g., from WO 03/047363. There is a wide range of pet foods available which may be grouped into (a) complete diets, (b) complementary diets, and (c) snacks and treats. Complete diets may be fed in addition to water for an extended period as the sole source of nutrients and will provide for all the energetic and nutrient needs of the animal and the physiological state for which it is intended. Complementary diets normally are not sufficient to ensure that all nutrient and energy requirements are met unless fed in combination with another foodstuff or diet. Snacks and treats are appetizers or for occasional feeding and are considered as complementary products. There are, however, a number of products available intended to form part of the daily diet or playing a role in animal well-being, e.g dental chews. In the present invention dental chews are especially suitable.

25-Hydroxycholecalciferol and vitamin D₃ (hereinafter : Inventive Ingredients) may be incorporated into conventional pet food e.g., into dry pet food by spraying an aqueous solution containing one or more Inventive Ingredients on the food composition while thoroughly mixing the composition, or by adding one or more Inventive Ingredients to the dough. Inventive Ingredients may be added simultaneously, e.g. at the same time and even as a premix, or consecutively as single Inventive Ingredient at a time or as a premix. Premixes may also include one or more of the other components of the final composition.

The following examples illustrate the invention further, with examples 4-6 for information

### Example 1

Commercial dry dog food (Royal Canin "Maxi Junior" for dogs as supplied by Royal Canin GmbH, Postfach 510954, D- 50945 Köln) is sprayed with an aqueous solution or dispersion of 25-hydroxycholecalciferol (e.g.,Hy·D® 1.25% as supplied by Roche Vitamins) and vitamin D₃ in an amount sufficient to provide 800 IU/kg of 25-hydroxycholecalciferol and 800 IU/kg of vitamin D₃ in the final food composition.

### Example 2

Commercial dry dog food (Royal Canin "Maxi Junior" for dogs as supplied by Royal Canin GmbH, Postfach 510954, D- 50945 Köln) is mixed with an aqueous solution or dispersion of 25-hydroxycholecalciferol (e.g., Hy.D^{®} 1.25%) and vitamin D₃ in an amount sufficient to provide about 500 to about 2000 IU/kg dog food of 25-Hydroxycholecalciferol, 500 to about 2000 IU/kg dog food of vitamin D₃ in the final food composition before cooking the entire blend. The food composition is dried to contain a dry matter of about 90 % by weight.

### Example 3

Commercial dog treats (Mera Dog "Biscuit" for dogs as supplied by Mera Tiernahrung GmbH, Marienstrasse 80-84, 47625 Kevelaer-Wetten, Germany) are sprayed an aqueous solution or dispersion of 25-hydroxycholecalciferol (e.g., Hy·D^{®} 1.25%) and vitamin D₃ in an amount sufficient to 500 to about 2000 IU/kg dog food of 25-Hydroxycholecalciferol and 500 to about 2000 IU/kg dog food of vitamin D₃.

### Example 4

Commercial dry cat food (Hill's Science diet "Feline Maintenance dry" for cats as supplied by Hill's Pet Nutrition GmbH, Liebigstrasse 2-20, D- 22113) is sprayed with an aqueous solution or dispersion of 25-hydroxycholecalciferol (e.g.,Hy·D^{®} 1.25%) and vitamin D₃ in an amount sufficient to provide 500 to about 2000 IU/kg dog food of 25-Hydroxycholecalciferol and 500 to about 2000 IU/kg dog food of vitamin D₃. The food composition is dried to contain a dry matter of about 90 % by weight.

### Example 5

Commercial wet cat food (Hill's Science diet "Feline Maintenance wet" for cats as supplied by Hill's Pet Nutrition GmbH, Liebigstrasse 2-20, D- 22113) is sprayed with an aqueous solution or dispersion of 25-hydroxycholecalciferol (e.g.,Hy·D^{®} 1.25%)and vitamin D₃ in an amount sufficient to provide 500 to about 2000 IU/kg dog food of 25-hydroxy-vitamin D₃ and 500 to about 2000 IU/kg dog food of vitamin D₃ in the final food composition before cooking the entire blend. The food composition is dried to contain a dry matter of about 90 % by weight.

### Example 6

Commercial cat treats (Whiskas Dentabits for cats as supplied by Whiskas, Masterfoods GmbH, Eitzer Str. 215, 27283 Verden/Aller, Germany) are sprayed with an aqueous solution or dispersion of 25-hydroxycholecalciferol (e.g., Hy·D^{®} 1.25%) and vitamin D₃ in an amount sufficient to provide 500 to about 2000 IU/kg dog food of 25-hydroxy-vitaminD₃ and 500 to about 2000 IU/kg dog food of vitamin D₃ in the final food composition before extruding the entire dye. The food composition is dried to contain a dry matter of about 90 % by weight.

## Claims

1. The use of 25-hydroxycholecalciferol in the manufacture of a pet food for treatment or prevention of osteochondrosis, degenerative arthritis or arthropathy in large or giant breed dogs, wherein 25-hydroxycholecalciferol is used in combination with vitamin D₃, and wherein the pet food contains from 500 to 2000 IU/kg food of 25-hydroxycholecalciferol and from 500 to 2000 IU/kg food of vitamin D₃.

## Patentansprüche

1. Verwendung von 25-Hydroxycholecalciferol in der Herstellung eines Haustierfuttermittels für die Behandlung oder Vorbeugung von Osteochondrose, degenerativer Arthritis oder Arthropathie bei Hunden großer und sehr großer Rassen, wobei 25-Hydroxycholecalciferol in Kombination mit Vitamin D₃ eingesetzt wird und wobei das Haustierfuttermittel 500 bis 2000 IU 25 Hydroxycholecalciferol pro kg Futtermittel und 500 bis 2000 IU Vitamin D₃ pro kg Futtermittel enthält.

## Revendications

1. Utilisation du 25-hydroxycholécalciférol dans la fabrication d'un aliment pour animaux domestiques pour le traitement ou la prévention d'ostéochondrose, d'arthrite dégénérative ou d'arthropathie chez les grands chiens de race ou les chiens de race géants, le 25-hydroxycholécalciférol étant utilisé en combinaison avec de la vitamine D₃, et l'aliment pour animaux domestiques contenant de 500 à 2000 IU/kg d'aliment de Vitamine D₃.
